(19) Europäisches Patentamt
European Patent Office
Office européen des brevets

(11) EP 0 942 009 A2

(12) EUROPEAN PATENT APPLICATION

(43) Date of publication:
15.09.1999 Bulletin 1999/37

(51) Int Cl.6: C08F 10/00, C08F 2/34, B01J 19/02

(21) Application number: 99301125.3

(22) Date of filing: 16.02.1999

(84) Designated Contracting States:
AT BE CH CY DE DK ES FI FR GB GR IE IT LI LU MC NL PT SE
Designated Extension States:
AL LT LV MK RO SI

(30) Priority: 11.03.1998 US 38575

(71) Applicant: UNION CARBIDE CHEMICALS & PLASTICS TECHNOLOGY CORPORATION
(a Delaware corporation)
Danbury, Connecticut 06817-0001 (US)

(72) Inventors:
- Hussein, Fathi David
  Cross Lanes, West Virginia 25313 (US)
- Lee, Kiu Hee
  South Charleston, West Virginia 25303 (US)
- Karol, Frederick John
  Belle Mead, New Jersey 08502 (US)

(74) Representative: Hayes, Adrian Chetwynd et al
Boult Wade Tennant,
27 Furnival Street
London EC4A 1PQ (GB)

# (54) Reduced sheeting in single-site and single-site like polymerization by employing a chromium containing compound

(57) A process for reducing sheeting during polymerization utilizing a single-site and single-site-like catalysts, by using a chromium containing compound to coat the reactor.



Printed by Jouve, 75001 PARIS (FR)

## Description

### Field of the Invention

This invention relates to the reduction of sheeting in polymerizations employing a single-site or single-site-like catalyst, e.g., a metallocene or a vanadium catalyst.

### Background of the Invention

Gas phase polymerization reactors are susceptible to the formation of sheets, lumps, chunks, scales or general fouling. The formation of these sheets or lumps results in reactor operation interruption and even shutdowns. It is known that static electricity contributes heavily to the formation of these undesirable sheets in commercial fluid bed polymerization reactors.

Solids build-up due to electrostatic forces takes place as a result of the continuous making and breaking of surface contacts between particles and between particles and reaction system walls. The magnitude of the charge generation and subsequent build-up depends on the characteristics of the system. In gas phase polymerizations, electrostatic forces can build up to a point where they can impede the mobility of small particles near the walls of the reactor, and create a stagnant layer. Continued reaction in this stagnant layer and lack of heat removal leads to the formation of sheets.

Sheet formation due to the build up of electrostatic charge occurs in polyolefin polymerizations in conjunction with a variety of single-site and single-site-like catalysts. Operation of fluidized bed reactors utilizing supported and non-supported single-site and single-site-like catalysts such as metallocene-aluminoxane complexes to produce certain ethylene resins for films and molding applications have not been entirely satisfactory due to the formation of sheets in the reactor. Sheet formation during polymerization results in undesirable properties in end-use applications. It is well known that the use of such catalysts to produce polyolefins is heavily plagued with static problems.

The art teaches various ways static voltage can be reduced or eliminated. Some of these are specific to particular catalyst systems and others are not. These ways include (1) reducing the rate of charge generation, (2) increasing the rate of discharge of electrical charge, and (3) neutralization of electrical charge. Some processes which have been used to control static include: (1) use of an additive to increase the conductivity of the particles thus providing a path for discharging see, for example, U.S. Patent Nos. 4,803,251; 4,855,370; 5,385,991; and 5,416,175, (2) installation of grounding devices in a fluidized bed to provide additional area for discharging electrostatic charges to ground, (3) ionization of gas or particles by electrical discharge to generate ions to neutralize electrostatic charges on the particles, and (4) the use of radioactive sources to produce radiation that will create ions to neutralized electrostatic charges on the particle. The application of these techniques to a commercial scale fluidized bed polymerization reactor may not be feasible or practical. Any additive used must not act as a poison to the polymerization catalyst, form undesirable by-products, nor adversely affect the quality of the final polymer product. Many of these paths to static control do not work effectively in single-site and single-site-like polymerizations for the production of polyolefins.

Accordingly, there is a need to control or neutralize static activity during gas phase fluidized bed polymerization employing a variety of monomers and single-site or single-site-like catalysts such as metallocenes.

### Summary of the Invention

Surprisingly, however, it has been discovered that if the inside surfaces or walls of the reactor vessel are treated with a chromium containing compound, wherein the chromium is present in the reactor at a valence of plus 2 or 3, prior to the commencement of polymerization utilizing a single-site or single-site-like catalyst, then the formation of sheeting during polymerization is substantially reduced and in some cases entirely eliminated regardless of the monomers and single-site and single-site-like catalyst employed. Alternatively, a seed bed of polymer can be treated with a chromium containing compound and fluidized to treat the inside surfaces of the reactor vessel before commencing polymerization with single-site and single-site-like catalysts.

### Detailed Description of the Invention

Polymerization process to which the invention applies include homopolymerization and copolymerization of C2-C12 alpha olefins, polymerizations of at least two alpha olefins and one or more dienes (e.g. a terpolymer of ethylene-propylene and a diene such as ethylidene norbornene or an octadiene such as a methyloctadiene). Preferably, the product produced is selected from the group consisting of a polyethylene; polypropylene; copolymer of ethylene and a $C_3$-$C_{12}$ alpha olefin; and a copolymer of propylene and a C4-C12 alpha olefin. Copolymers of ethylene/hexene-1 and ethylene/octene-1; an ethylene-propylene-diene terpolymer wherein the diene is selected from the group consisting of ethylidene norbornene, octadiene including methyloctadiene (e.g., 1-methyl-1,6-octadiene and 7-methyl-1,6-octadiene), hexadiene, dicyclopentadiene, and mixtures thereof are most preferred.

Optionally, these polymerizations, especially elastomeric polymerizations (i.e., especially those utilizing a diene), can be conducted in the presence of an inert particulate material such as carbon black, silica, clay and talc as described in U.S. Patent No. 4,994,534. These polymerizations can also be conducted in the absence of inert particulate material in accordance with U.S. Patent No. 5,585,184. Gas phase polymerizations can be conducted in conventional, condensed mode, including induced condensed mode, and liquid monomer mode processes. Such processes are disclosed, for example, in U.S. Patent Nos. 4,543,399; 4,588,790; 4,994,534; 5,352,749; 5,462,999; 5,453,471; and WO Patent Nos. 96/04322 and 96/04323. The present invention is useful for gas phase polymerizations employing metallocene and other single-site and single-site-like catalysts, especially supported and unsupported metallocene-alumoxane catalysts (e.g., U.S. Patent Nos. 4,530,914; 4,665,047; 4,752,597; 5,218,071; 5,272,236; 5,2278,272; 5,317,036; 5,527,752). Vanadium catalysts also display single-site or single-site-like characteristics and/or behavior and are useful in the invention. Such vanadium catalysts are well-known and taught, for example, in U.S. Patent Nos. 4,508,842; 4,988,783; 5,096,869; 5,342,907; and 5,332,793. They can include vanadium trihalide (e.g., VC13), vanadium (acetylacetonate)3, vanadium oxyhalide (e.g., $VOCl_2$) along with their known cocatalysts and/or promoters. These catalysts can be supported or unsupported, in liquid or soluble form, prepolymerized, or spray dried with or without a filler.

The catalyst composition may be prepared using any metallocene or other single-site catalyst precursor. The catalyst composition may contain one or more than one single-site catalyst precursor. The single site catalyst precursor may be made by any means available; the method of synthesis of the single-site catalyst precursor is not critical to the invention.

As used herein, in a preferred embodiment, a single-site catalyst precursor is a catalyst precursor that produces, when used with an appropriate activating cocatalyst in gas phase polymerization, a 0.950 density ethylene/1-hexene copolymer having a Crystallizable Chain Length Distribution Index (CCLDI) of less than 12. The CCLDI of a copolymer is determined using Temperature Rising Elution Fractionation (TREF). The analytical TREF method used is similar to that described in Wild et al., J. Polymer Sci., Poly. Phys. Ed., Vol. 20, p. 441 (1982). A dilute solution of the copolymer in a solvent such as 1,2,4-trichlorobenzene, at 1-4 mg/ml, is loaded at high temperature onto a packed column. The column is then allowed to slowly cool down at 0.1°C/min. to ambient temperature in a controlled manner so that the copolymer is crystallized onto the packing in the order of increasing branching (or decreasing crystallinity) with the decreasing temperature. The column is then heated in a controlled manner at 0.7°C/min to above 140°C with a constant solvent flow at 2ml/min through the column. The polymer fractions as they are eluted have decreasing branching (or increasing crystallinity) with the increasing temperature. An infrared concentration detector is used to monitor effluent concentrations. From the TREF temperature data, the branch frequency may be obtained for a given comonomer. Consequently, the main chain lengths between branches, expressed as Lw and $L_n$, may be calculated as follows. Lw is the weight average chain length between branches:

$$L_w=\Sigma_i w_i L_i$$

and $L_n$ is the number average chain length between branches:

$$L_n=1/\Sigma_i(w_i/L_i),$$

wherein wi is the weight fraction of the copolymer component i having an average backbone chain spacing Li between two adjacent branch points.

The single site catalyst precursor may be a metallocene, i.e., an organometallic coordination complex of one or more π-bonded moieties (i.e., cycloalkadienyl groups) in association with a metal atom from Groups IIIB to VIII or the Lanthanide series of the Periodic Table of Elements. Bridged and unbridged mono-, di-, and tri- cycloalkadienyl/metal compounds are the most common metallocene catalysts, and generally are of the formula:

$$(L)_y R^1_z (L')MX_{(x-y-1)} \qquad (I)$$

wherein M is a metal from groups IIIB to VIII or a rare earth metal of the Periodic Table; L and L' are the same or different and are π-bonded ligands coordinated to M, preferably cycloalkadienyl groups such as cyclopentadienyl, indenyl, or fluorenyl groups optionally substituted with one or more hydrocarbyl groups containing 1 to 20 carbon atoms; $R^1$ is selected from the group consisting of $C_1$-$C_4$ substituted or unsubstituted alkylene radicals, dialkyl or diaryl germanium or silicon groups, and alkyl or aryl phosphine or amine radicals bridging L and L'; each X is independently hydrogen, an aryl, alkyl, alkenyl, alkylaryl, or arylalkyl radical having 1-20 carbon atoms, a hydrocarboxy radical having 1-20 carbon atoms; y is 0, 1, or 2; x is 1, 2, 3, or 4 depending upon the valence state of M; z is 0 or 1 and is 0 when y is 0; and x-y ≥ 1.

Illustrative but non-limiting examples of metallocenes represented by formula I are dialkyl metallocenes such as bis(cyclopentadienyl)titanium dimethyl, bis(cyclopentadienyl)titanium diphenyl, bis(cyclopentadienyl)zirconium dimethyl, bis(cyclopentadienyl)zirconium diphenyl, bis(cyclopentadienyl)hafnium methyl and diphenyl, bis(cyclopentadienyl)titanium di-neopentyl, bis(cyclopentadienyl)zirconium di-neopentyl, bis(cyclopentadienyl)titanium dibenzyl, bis(cyclopentadienyl)zirconium dibenzyl, bis(cyclopentadienyl)vanadium dimethyl; the mono alkyl metallocenes such as bis(cyclopentadienyl)titanium methyl chloride, bis(cyclopentadienyl)titanium ethyl chloride, bis(cyclopentadienyl) titanium phenyl chloride, bis(cyclopentadienyl)zirconium methyl chloride, bis(cyclopentadienyl)zirconium ethyl chloride, bis(cyclopentadienyl)zirconium phenyl chloride, bis(cyclopentadienyl)titanium methyl bromide; the trialkyl metallocenes such as cyclopentadienyl titanium trimethyl, cyclopentadienyl zirconium triphenyl, and cyclopentadienyl zirconium trineopentyl, cyclopentadienyl zirconium trimethyl, cyclopentadienyl hafnium triphenyl, cyclopentadienyl hafnium trineopentyl, and cyclopentadienyl hafnium trimethyl; monocyclopentadienyl titanocenes such as pentamethylcyclopentadienyl titanium trichloride, pentaethylcyclopentadienyl titanium trichloride, bis(pentamethylcyclopentadienyl) titanium diphenyl; the carbene represented by the formula bis(cyclopentadienyl)titanium=CH2 and derivatives of this reagent; substituted bis(cyclopentadienyl)titanium (IV) compounds such as bis(indenyl)titanium diphenyl or dichloride, bis(methylcyclopentadienyl)titanium diphenyl or dihalides; dialkyl, trialkyl, tetraalkyl and pentaalkyl cyclopentadienyl titanium compounds such as bis(1,2-dimethylcyclopentadienyl)titanium diphenyl or dichloride, bis(1,2-diethylcyclopentadienyl)titanium diphenyl or dichloride; silicon, phosphine, amine or carbon bridged cyclopentadiene complexes such as dimethyl silyldicyclopentadienyl titanium diphenyl or dichloride, methyl phosphine dicyclopentadienyl titanium diphenyl or dichloride, methylenedicyclopentadienyl titanium diphenyl or dichloride and other dihalide complexes, and the like, as well as isopropyl(cyclopentadienyl)(fluorenyl)zirconium dichloride, isopropyl(cyclopentadienyl) (octahydrofluorenyl)zirconium dichloride, diphenylmethylene(cyclopentadienyl)(fluorenyl)zirconium dichloride, diisopropylmethylene (cyclopentadienyl)(fluorenyl)zirconium dichloride, diisobutylmethylene(cyclopentadienyl)(fluorenyl)zirconium dichloride, ditertbutylmethylene (cyclopentadienyl)(fluorenyl)zirconium dichloride, cyclohexylidene(cyclopentadienyl) (fluorenyl)zirconium dichloride, diisopropylmethylene (2,5-dimethylcyclopentadienyl)(fluorenyl)zirconium dichloride, isopropyl(cyclopentadienyl)(fluorenyl)-hafnium dichloride, diphenylmethylene (cyclopentadienyl)-(fluorenyl)hafnium dichloride, diisopropylmethylene-(cyclopentadienyl)(fluorenyl)hafnium dichloride, diisobutylmethylene(cyclopentadienyl)(fluorenyl)hafnium dichloride, ditertbutylmethylene(cyclopentadienyl)-(fluorenyl)hafnium dichloride, cyclohexylidene (cyclopentadienyl)(fluorenyl)hafnium dichloride, diisopropylmethylene(2,5-dimethylcyclopentadienyl)(fluorenyl) hafnium dichloride, isopropyl(cyclopentadienyl)(fluorenyl)titanium dichloride, diphenylmethylene(cyclopentadienyl) (fluorenyl)titanium dichloride, diisopropylmethylene(cyclopentadienyl)-(fluorenyl)titanium dichloride, diisobutylmethylene-(cyclopentadienyl)(fluorenyl)titanium dichloride, ditertbutylmethylene(cyclopentadienyl)(fluorenyl)titanium dichloride, cyclohexylidene(cyclopentadienyl)(fluorenyl)titanium dichloride, diisopropylmethylene(2,5 dimethylcyclopentadienyl)(fluorenyl)titanium dichloride, racemic-ethylene bis (1-indenyl) zirconium (IV) dichloride, racemic-ethylene bis (4,5,6,7-tetrahydro-1-indenyl) zirconium (IV) dichloride, racemic-dimethylsilyl bis (1-indenyl) zirconium (IV) dichloride, racemic-dimethylsilyl bis (4,5,6,7-tetrahydro-1-indenyl) zirconium (IV) dichloride, racemic-1,1,2,2-tetramethylsilanylene bis (1-indenyl) zirconium (IV) dichloride, racemic-1,1,2,2-tetramethylsilanylene bis (4,5,6,7-tetrahydro-1-indenyl) zirconium (IV), dichloride, ethylidene (1-indenyl tetramethylcyclopentadienyl) zirconium (IV) dichloride, racemic-dimethylsilyl bis (2-methyl-4-t-butyl-1-cyclopentadienyl) zirconium (IV) dichloride, racemic-ethylene bis (1-indenyl) hafnium (IV) dichloride, racemic-ethylene bis (4,5,6,7-tetrahydro-1-indenyl) hafnium (IV) dichloride, racemic-dimethylsilyl bis (1-indenyl) hafnium (IV) dichloride, racemic-dimethylsilyl bis (4,5,6,7-tetrahydro-1-indenyl) hafnium (IV) dichloride, racemic-1,1,2,2- tetramethylsilanylene bis (1-indenyl) hafnium (IV) dichloride, racemic-1,1,2,2-tetramethylsilanylene bis (4,5,6,7-tetrahydro-1- indenyl) hafnium (IV), dichloride, ethylidene (1-indenyl-2,3,4,5-tetramethyl-1-cyclopentadienyl) hafnium (IV) dichloride, racemic- ethylene bis (1-indenyl) titanium (IV) dichloride, racemic-ethylene bis (4,5,6,7-tetrahydro-1-indenyl) titanium (IV) dichloride, racemic- dimethylsilyl bis (1-indenyl) titanium (IV) dichloride, racemic- dimethylsilyl bis (4,5,6,7-tetrahydro-1-indenyl) titanium (IV) dichloride, racemic-1,1,2,2-tetramethylsilanylene bis (1-indenyl) titanium (IV) dichloride racemic-1,1,2,2-tetramethylsilanylene bis (4,5,6,7-tetrahydro-1-indenyl) titanium (IV) dichloride, and ethylidene (1-indenyl-2,3,4,5-tetramethyl-1-cyclopentadienyl) titanium IV) dichloride.

A preferred type of single site catalyst precursor for use in the invention is a complex of a transition metal, a substituted or unsubstituted pi-bonded ligand, and one or more heteroallyl moieties, such as those described in U.S. Patent No. 5,527,752. Preferably, such complexes have one of the following formulas:

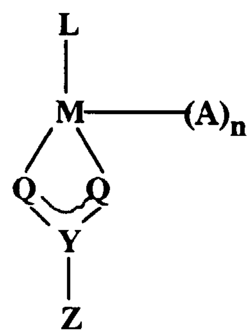

(II)

wherein:

M is a transition metal, preferably Zr or Hf;
L is a substituted or unsubstituted, pi-bonded ligand coordinated to M, preferably a cycloalkadienyl ligand;
each Q is independently selected from the group consisting of -O-, -NR-, $-CR_2-$ and -S-, preferably oxygen;
Y is either C or S, preferably carbon;
Z is selected from the group consisting of -OR, $-NR_2$, $-CR_3$,-SR, $-SiR_3$, $-PR_2$, -H, and substituted or unsubstituted aryl groups, with the proviso that when Q is -NR- then Z is selected from the group consisting of -OR, $-NR_2$, -SR, $-SiR_3$, $-PR_2$ and -H, preferably Z is selected from the group consisting of -OR, $-CR_3$ and $-NR_2$;
$\underline{n}$ is 1 or 2;
A is a univalent anionic group when $\underline{n}$ is 2 or A is a divalent anionic group when $\underline{n}$ is 1, preferably A is a carbamate, carboxylate, or other heteroallyl moiety described by the Q, Y and Z combination; and
each R is independently a group containing carbon, silicon, nitrogen, oxygen, and/or phosphorus where one or more R groups may be attached to the L substituent, preferably R is a hydrocarbon group containing from **1** to 20 carbon atoms, most preferably an alkyl, cycloalkyl, or an aryl group and one or more may be attached to the L substituent;

or

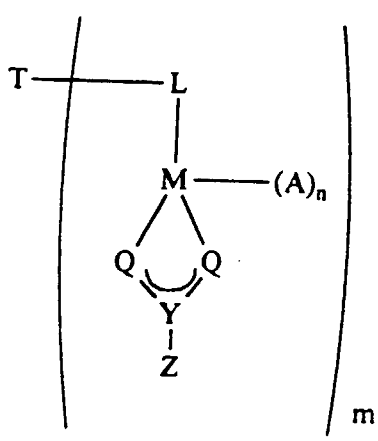

(III)

wherein:

M is a transition metal, preferably Zr or Hf;
L is a substituted or unsubstituted, pi-bonded ligand coordinated to M, preferably a cycloalkadienyl ligand;
each Q is independently selected from the group consisting of -O-, -NR-, $-CR_2-$ and -S-, preferably oxygen;
Y is either C or S, preferably carbon;
Z is selected from the group consisting of -OR, $-NR_2$, $-CR_3$,-SR, $-SiR_3$, $-PR_2$, -H, and substituted or unsubstituted aryl groups, with the proviso that when Q is -NR- then Z is selected from the group consisting of -OR, -NR2, -SR, $-SiR_3$, -PR2, -H, and substituted or unsubstituted aryl groups, preferably Z is selected from the group consisting

of -OR, $-CR_3$ and $-NR_2$;
n is 1 or 2;
A is a univalent anionic group when n is 2 or A is a divalent anionic group when n is 1, preferably A is a carbamate, carboxylate, or other heteroallyl moiety described by the Q, Y and Z combination;
each R is independently a group containing carbon, silicon, nitrogen, oxygen, and/or phosphorus where one or more R groups may be attached to the L substituent, preferably R is a hydrocarbon group containing from 1 to 20 carbon atoms, most preferably an alkyl, cycloalkyl, or an aryl group and one or more may be attached to the L substituent;
T is a bridging group selected from the group consisting of alkylene and arylene groups containing from 1 to 10 carbon atoms optionally substituted with carbon or heteroatoms, germanium, silicone and alkyl phosphine; and
m is 2 to 7, preferably 2 to 6, most preferably 2 or 3.

In formulas II and III, the supportive substituent formed by Q, Y and Z is a unicharged polydentate ligand exerting electronic effects due to its high polarizability, similar to the cyclopentadienyl group. In the most preferred embodiments of this invention, the disubstituted carbamates,

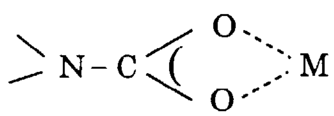

and the carboxylates

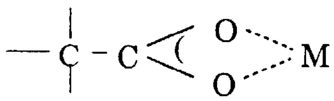

are employed.

Examples of complexes according to formulas I and II include indenyl zirconium tris(diethylcarbamate), indenyl zirconium tris(trimethylacetate), indenyl zirconium tris(p-toluate), indenyl zirconium tris(benzoate), (1-methylindenyl) zirconium tris(trimethylacetate), (2-methylindenyl) zirconium tris(diethylcarbamate), (methylcyclopentadienyl) zirconium tris(trimethylacetate), cyclopentadienyl tris(trimethylacetate), tetrahydroindenyl zirconium tris(trimethylacetate), and (pentamethylcyclopentadienyl) zirconium tris(benzoate). Preferred examples are indenyl zirconium tris(diethylcarbamate), indenyl zirconium tris(trimethylacetate), and (methylcyclopentadienyl) zirconium tris(trimethylacetate).

One method of manufacturing a preferred catalyst precursor, indenyl zirconium tris(diethylcarbamate), is to first react a source of cycloalkadienyl ligand with a metal compound of the formula $M(NR_2)_4$, in which M and R are defined above, to introduce the cycloalkadienyl ligand onto the metal compound. The resulting product is then dissolved in an inert solvent, such as toluene, and the heterocumulene $CO_2$ is contacted with the dissolved product to insert into one or more $M-NR_2$ bonds to form a carbamate.

Another type of single site catalyst precursor that can be used in accordance with the invention is a constrained geometry catalyst of the formula:

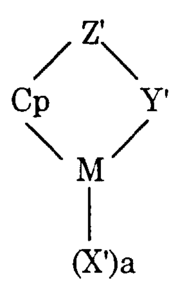

(IV)

wherein:

M is a metal of groups IIIB to VIII of the Periodic Table;
Cp is a cyclopentadienyl or substituted cyclopentadienyl group bound in an $\eta^5$ mode to M;
Z' is a moiety comprising boron, or a member of group IVB of the Periodic Table and optionally sulfur or oxygen, the moiety having up to 20 non-hydrogen atoms, and optionally Cp and.Z' together form a fused ring system;
X' is an anionic ligand group or a neutral Lewis base ligand group having up to 30 non-hydrogen atoms;
<u>a</u> is 0, 1, 2, 3 or 4 depending on the valence of M; and
Y' is an anionic or non-anionic ligand group bonded to Z' and M and is nitrogen, phosphorus, oxygen or sulfur having up to 20 non-hydrogen atoms, and optionally Y' and Z' together form a fused ring system.

Constrained geometry catalysts are well known to those skilled in the art and are disclosed in, for example, U.S. Patent Nos. 5,026,798 and 5,055,438 and published European Application No. 0 416 815 A2.
Illustrative but non-limiting examples of substituents Z', Cp, Y', X' and M in formula IV are:

| Z' | Cp | Y' | X' | M |
|---|---|---|---|---|
| dimethylsilyl | cyclopentadi -enyl | t-butylamido | chloride | titanium |
| methylphenylsilyl | fluorenyl | phenylamido | methyl | zirconium |
| diphenylsilyl | indenyl | cyclohexylamido | | hafnium |
| tetramethyl -ethylene | | oxo | | |
| ethylene | tetramethyl-cyclopentadienyl | | | |
| diphenylmethylene | | | | |

The invention is also useful with another class of single-site catalyst precursors, di(imine) metal complexes, as described in PCT Application No. WO 96/23010. Such di(imine) metal complexes are transition metal complexes of bidentate ligands selected from the group consisting of:

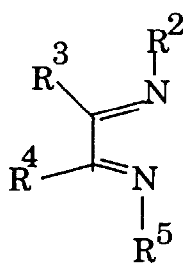

(V)

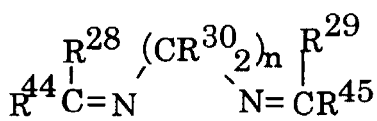

(VI)

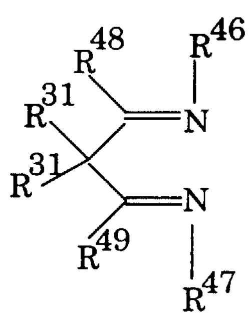

(VII),

and

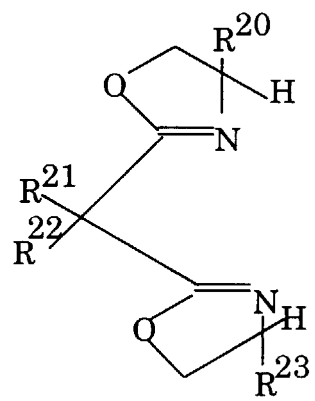

(VIII)

wherein said transition metal is selected from the group consisting of Ti, Zr, Sc, V, Cr, a rare earth metal, Fe, Co, Ni, and Pd;

$R^2$ and $R^5$ are each independently hydrocarbyl or substituted hydrocarbyl, provided that the carbon atom bound to the imino nitrogen atom has at least two carbon atoms bound to it;
$R^3$ and $R^4$ are each independently hydrogen, hydrocarbyl, substituted hydrocarbyl, or $R^3$ and $R^4$ taken together are hydrocarbylene or substituted hydrocarbylene to form a carbocyclic ring;
$R^{44}$ is hydrocarbyl or substituted hydrocarbyl, and $R^{28}$ is hydrogen, hydrocarbyl or substituted hydrocarbyl or $R^{44}$ and $R^{28}$ taken together form a ring;
$R^{45}$ is hydrocarbyl or substituted hydrocarbyl, and $R^{29}$ is hydrogen, substituted hydrocarbyl or hydrocarbyl, or $R^{45}$ and $R^{29}$ taken together form a ring;
each $R^{30}$ is independently hydrogen, substituted hydrocarbyl or hydrocarbyl, or two of $R^{30}$ taken together form a ring;
each $R^{31}$ is independently hydrogen, hydrocarbyl or substituted hydrocarbyl;
$R^{46}$ and $R^{47}$ are each independently hydrocarbyl or substituted hydrocarbyl, provided that the carbon atom bound to the imino nitrogen atom has at least two carbon atoms bound to it;
$R^{48}$ and $R^{49}$ are each independently hydrogen, hydrocarbyl, or substituted hydrocarbyl;
$R^{20}$ and $R^{23}$ are independently hydrocarbyl or substituted hydrocarbyl;
$R^{21}$ and $R^{22}$ are independently hydrogen, hydrocarbyl or substituted hydrocarbyl; and
$\underline{n}$ is 2 or 3;
and provided that:
said transition metal also has bonded to it a ligand that may be displaced by or added to the olefin monomer being polymerized; and
when the transition metal is Pd, said bidentate ligand is (V), (VII) or (VIII).

The electrostatic charge in the reactor is monitored with a static probe. The probe consists of a 1/2-inch spherical electrode, which is inserted 1/2-inch to 3-inches in the fluidized bed at the location where static charge builds up, in the examples, a location a few feet above the distributor plate. The output from the static probe gives a measure of the electrostatic potential between the tip of the probe and the ground. The electrostatic voltage in the reactor ranges from +8000 volts to -8000 volts.

The present invention contemplates maintaining the static electric charge in a reactor at the site of possible sheet formation below static voltage levels which would otherwise cause sheet formation by introducing a chromium containing compound into the reaction vessel in a non-reacting atmosphere (e.g, nitrogen, argon, ethane, propane, and the like). Any chromium containing compound that does not act as a poison to the polymerization catalyst and/or adversely affect the quality of the product can be employed. In the present invention, when the inside walls of the reactor and/or other internal surfaces are treated prior to the commencement of polymerization with a chromium containing compound wherein the chromium containing compound is present in the reactor at a valence of plus 2 or 3, then the formation of sheeting during polymerization is substantially reduced and in some cases entirely eliminated. Alternatively, a seed bed of polymer can be doped or mixed with a chromium containing compound, and fluidized to

coat the inside walls of the reactor prior to commencing polymerization and/or introducing catalyst.

Illustrative chromium containing compounds that can be used in the present invention are the following:

The bis(cyclopentadienyl) chromium (II) compounds having the following formula:

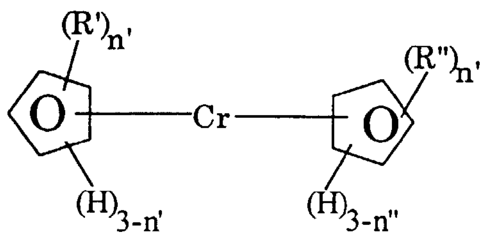

wherein R' and R" are the same or different $C_1$-$C_{20}$ inclusive hydrocarbon radicals and n' and n" are the same of different integers of 0 to 5 inclusive. The R' and R" hydrocarbon radicals can be saturated or unsaturated and can include aliphatic, alicyclic and aromatic radicals such as methyl, ethyl, propyl, butyl, pentyl, cyclopentyl, cyclohexyl, allyl, phenyl and naphthyl radicals. Other specific compounds which are suitable include chromic acetyl acetonate, chromic nitrate, chromous or chromic acetate, chromous or chromic halide (Cl, Br, or F), chromous or chromic sulfate, and polymerization catalysts produced from chromium compounds where the chrome is in the plus 2 or 3 valence state. Bis(cyclopentadienyl) chromium (chromocene) is the preferred chromium containing compound.

In general, the chromium containing compound is introduced into the reactor prior to polymerization and can be introduced in any manner such that the surface of the walls of the reactor is contacted with the chromium compound. In a preferred technique, the chromium containing compound is dissolved in a suitable solvent and is introduced into the reactor in an inert or non-reactive atmosphere. A chromium containing compound can be applied to the internal surface of the reactor in the absence of a seed bed of resin by circulating inert gas through an empty reactor vessel injected with the chromium compound. A resin bed (i.e., a seed bed) can be employed to help disperse the chromium compound through the reactor. Other techniques to apply the chromium containing compound to the inside of the reactor system include painting, spraying or by other similar methods or coating procedures.

Suitable solvents for this purpose include but are not limited to benzene, toluene, isopentane, hexane, and water. Mixtures of solvents can also be employed. The choice and use of a solvent is dependent on the form of the chromium containing compound and the method of application enacted. The function of the solvent is to carry and aid in the dispersion of the chromium containing compound. Suitable inert or non-reactive gases include but are not limited to nitrogen, carbon dioxide, a $C_1$-$C_{20}$ alkane, argon, and air.

The amount of chromium compound utilized in the process should be sufficient to effect the desired result, and the amount can be generally determined by one skilled in the art. In general, however, an amount of at least 3.5 x $10^{-7}$ pound moles chromium per square foot of surface to be treated, preferably 1.0 x $10^{-5}$ to about 5 x $10^{-3}$ pound moles per square foot of surface to be treated is preferred.

All references cited herein are incorporated by reference.

The invention is illustrated by the examples which follow. All parts and percentages are by weight unless otherwise specified.

## Examples

### Catalyst Preparation:

Catalyst A**:** A metallocene catalyst was prepared by supporting bis(n-butyl cyclopentadienyl) zirconium chloride and methyl alumoxane on Davison 955 silica. The catalyst formulation was such that there were 33 micromoles of zirconium for each gram of final catalyst and the Al:Zr ratio was approximately 180:1.

Catalyst B: Reaction of (Indenyl) $Zr(NEt_2)_3$ with 3 molar equivalents of a carboxylic acid, $RCO_2H$, produces [(Indenyl)$Zr(O_2CR)_3$], which when combined with trimethylaluminoxane, formed a highly active single-site catalyst for copolymerization of ethylene and hexene. Specifically, the reaction of (Indenyl) $Zr(NEt_2)_3$ with 3 molar equivalents of pivalic acid in benzene gave (Indenyl) $Zr(O_2C$-t-$Bu)_3$. This Zr pivalate catalyst (1µmole) was reacted with MMAO (1000:1 Al:Zr) and used for ethylene-hexene copolymerization.

Catalyst C: A catalyst system as described in U.S. Patent No. 5,342,907 comprising a catalyst precursor consisting of vanadium(acetylacetonate)3 was impregnated into silica gel in a hexane solvent to provide 0.5 millimole of vanadium per gram of support, and the supported catalyst precursor is dried.

Fluidized Bed Polymerization: Polymerization is carried out in a fluidized bed reactor as described in U.S. Patent No. 4,482,687. The bed is made up of the same granular resin produced in the reactor. During the course of

the polymerization, the bed is comprised of formed polymer particles, growing polymer particles, catalyst particles, and optionally inert particulate materials fluidized by reactant monomer(s) and inert gaseous components introduced at a flow rate or velocity sufficient to cause the particles to separate and act as a fluid. The fluidizing gas is made up to the initial feed, make-up feed, and cycle (recycle) gas. Typical cycle gas is comprised of monomer and comonomer, if employed, and nitrogen. The reactor is brought up to polymerization conditions by feeding monomer(s) and hydrogen as a chain transfer agent. The electrostatic charge in the reactor is monitored with a static probe mounted at a location a few feet above the distributor plate. The data for the polymerizations are set forth in Table 1.

In Example 1 (comparative), a polymerization is carried out using Catalyst A to produce a polymer of ethylene and hexene at 70°C without reactor surface treatment. A static level of -1500 volts and sheeting are experienced. In Example 2, the polymerization of Example 1 was repeated after the reactor surface is treated with chromocene in the presence of a resin bed to disperse the chromocene solution. A controllable static level and negligible sheeting are experienced. Examples 3 through 6 are conducted similar to Example 1, but with the conditions and parameters enumerated in Table 1.

**Table 1.**

| Example | Catalyst | Co-Catalyst | Scavenger/ or Promoter | Surface Treatment | Sheeting Level | Static | Temp. °C | $C_2$ (psia) | $C_6/C_2$ | $H_2/C_2$ |
|---|---|---|---|---|---|---|---|---|---|---|
| 1 | A | MAO | TIBA | None | High | -1500V | 70 | 100 | .01 | 0.0005 |
| 2 | A | MAO | TIBA | Yes | Negligible | Controlled | 70 | 100 | .01 | 0.0005 |
| 3 | B | MMAO | ---- | Yes with resin bed | Negligible | Controlled | 80 | 180 | .02 | 0.0005 |
| 4 | B | MMAO | ---- | Yes with no resin bed | Negligible | Controlled | 80 | 180 | .02 | 0.0005 |
| 5 | C | DEAC-TEAL | ETCA | None | High | -1500V | 40 | 150 | 0.03 | 0.05 |
| 6 | C | DEAC-TEAL | ETCA | Yes with resin bed | Negligible | Controlled | 40 | 150 | 0.03 | 0.05 |

## Claims

1. A process for the polymerization of olefins and diolefins in a fluidized bed reactor utilizing a single-site or single-site-like polymerization catalyst prone to cause sheeting during said polymerization, which comprises maintaining the static electric charge in said reactor at the site of possible sheet formation below static voltage levels which would cause sheet formation by introducing a chromium containing compound into said reactor in such manner as to contact the surfaces of said reactor, said chromium containing compound being present in a valence state of plus 2 or 3.

2. The process of Claim 1 wherein said chromium compound is dissolved in an inert solvent prior to introduction to the reactor and thereafter introduced to the reactor in an inert atmosphere.

3. The process of Claim 1 or 2 wherein the chromium containing compound has the following formula:

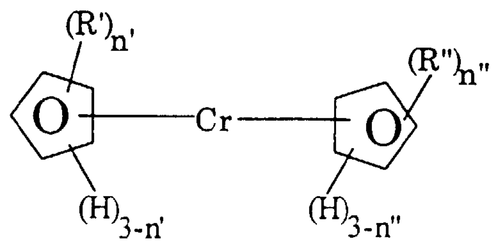

wherein R' and R" are the same or different $C_1$-$C_{20}$ inclusive hydrocarbon radicals and n' and n" are the same or different integers of 0 to 5 inclusive.

4. The process of Claim 3 wherein the chromium compound is bis(cyclopentadienyl)chromium.

5. The process of any one of the preceding Claims wherein the catalyst is selected from the group consisting of:

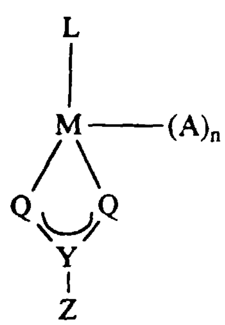

and

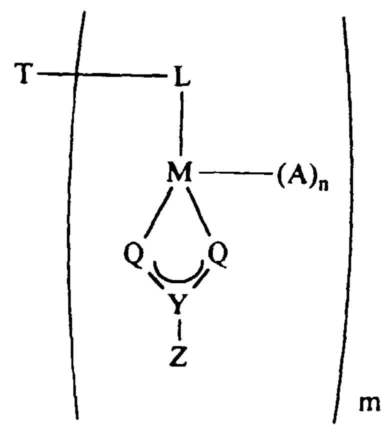

and mixtures thereof wherein:

M is Zr or Hf;
L is a substituted or unsubstituted, pi-bonded ligand;
each Q is the same or different and is independently selected from the group consisting of -O-, -NR-, $-CR_2-$ and -S-;
Y is either C or S;
Z is selected from the group consisting of -OR-, $-NR_2$, $-CR_3$, -SR, $-SiR_3$, $-PR_2$, -H and substituted or unsubstituted aryl groups, with the proviso that when Q is -NR- then Z is selected from the group consisting of -OR, $-NR_2$, -SR, $-SiR_3$, $-PR_2$ and -H;
n is 1 or 2;
A is a univalent anionic group when n is 2 or A is a divalent anionic group when n is 1;

each R is independently a group containing carbon, silicon, nitrogen, oxygen, and/or phosphorus where one or more R groups may also be attached to the L substituent to form a cyclic compound;

T is a bridging group selected from the group consisting of alkylene and arylene groups containing from 1 to 10 carbon atoms optionally substituted with carbon or heteroatoms, germanium, silicon and alkyl phosphine; and
m is 2 to 7; and cocatalyst.

**6.** The process of any one of Claims 1 to 4 wherein the catalyst comprises (i) a vanadium compound selected from the group consisting of vanadium (acetylacetonate)3, vanadium oxychloride, vanadium trichloride, and mixtures thereof; and (ii) cocatalyst.

**7.** The process of any one of the preceding Claims wherein said polymerization is (a) a homopolymerization or copolymerization of one or more $C_2$-$C_{12}$ alpha olefins; (b) a polymerization of at least two $C_2$-$C_{12}$ alpha olefins and a diene; or (c) a polymerization of at least one monomer selected from the group consisting of butadiene, isoprene, chloroprene, and styrene.

**8.** The process of Claim 7 wherein the polymerization is conducted in the presence of an inert particulate material selected from the group consisting of carbon black, silica, clay, talc and mixtures thereof.

**9.** The process of any one of the preceding Claims wherein a seed bed is treated with the chromium containing compound and injected into the reactor and fluidized.

**10.** The process of any one of Claims 1 to 8 wherein the internal surface of the reactor is contacted with the chromium containing compound in the absence of a seed bed of resin.

**11.** The process of any one of the preceding Claims wherein the amount of the chromium compound contains 4.88 x $10^{-5}$ to 24.4 x $10^{-3}$ kg moles of chromium per square metre of surface to be treated (1.0 x $10^{-5}$ to 5 x $10^{-3}$ pound moles of chromium per square foot of surface to be treated).

**12.** The process of any one of the preceding Claims wherein the product produced is selected from the group consisting of a polyethylene; polypropylene, copolymer of ethylene and hexene-1; a copolymer of ethylene and octene-1; a copolymer of ethylene and propylene; an ethylene-propylene-diene terpolymer wherein the diene is selected from the group consisting of ethylidene norbornene, octadiene, methyloctadiene, hexadiene, dicyclopentadiene, and mixtures thereof; polybutadiene; and polyisporene.